(19) Europäisches Patentamt
European Patent Office
Office européen des brevets

(11) **EP 4 282 839 A1**

(12) **EUROPEAN PATENT APPLICATION**
published in accordance with Art. 153(4) EPC

(43) Date of publication:
**29.11.2023 Bulletin 2023/48**

(21) Application number: **22742543.6**

(22) Date of filing: **17.01.2022**

(51) International Patent Classification (IPC):
**C03B 37/018** $^{(2006.01)}$

(52) Cooperative Patent Classification (CPC):
**C03B 37/018**

(86) International application number:
**PCT/JP2022/001388**

(87) International publication number:
**WO 2022/158421 (28.07.2022 Gazette 2022/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **20.01.2021 JP 2021007466**

(71) Applicant: **FURUKAWA ELECTRIC CO., LTD.
Chiyoda-ku
Tokyo 100-8322 (JP)**

(72) Inventor: **TAKAHASHI, Tadashi
Tokyo 100-8322 (JP)**

(74) Representative: **Leinweber & Zimmermann
Patentanwalts-PartG mbB
European Patent Attorneys
Viktualienmarkt 8
80331 München (DE)**

(54) **DEVICE FOR MANUFACTURING OPTICAL FIBER PREFORM AND METHOD FOR MANUFACTURING OPTICAL FIBER PREFORM**

(57) An apparatus for manufacturing an optical fiber preform and a method for manufacturing an optical fiber preform which can manufacture a high quality optical fiber preform without increasing the cost are provided. An apparatus for manufacturing an optical fiber preform includes: a holding part that rotatably holds a target with a center axis of the target as a rotation axis; a plurality of burner units that are arranged at mutually different positions in a circumferential direction of the target, forms flames for generating glass particles to be deposited on the target, and are capable of performing reciprocating movements along the target in a movable range between a first position on one end side of the target and a second position on the other end side of the target; and a control unit that controls the plurality of burner units so that speeds of return movements of the plurality of burner units that perform the reciprocating movements are different from each other.

FIG. 1

EP 4 282 839 A1

**Description**

[Technical Field]

The present invention relates to an apparatus for manufacturing an optical fiber preform and a method for manufacturing an optical fiber preform.

[Background Art]

Patent Literature 1 discloses a method for manufacturing an optical fiber preform in which a target rod is vertically arranged and rotated, and a plurality of glass fine particle generating apparatuses are reciprocated in the vertical direction at different positions in the circumferential direction while leaving the outlet facing the target rod at intervals in the vertical direction. According to the manufacturing method disclosed in Patent Literature 1, the conditions for supplying the fuel gas and the raw material gas to the glass fine particle generating apparatuses are the same at both the rising and falling times, and the glass fine particles are deposited at both the rising and falling times of the glass fine particle generating apparatuses.

The optical fiber preform obtained by the above method for manufacturing an optical fiber preform may generate bubbles at the time of vitrification due to an uneven density distribution. Therefore, Patent Literature 2 discloses a method for manufacturing an optical fiber preform that suppresses the generation of bubbles during vitrification. In the manufacturing method disclosed in Patent Literature 2, when a plurality of burners are reciprocated from the vicinity of one end portion of a target to the vicinity of the other end portion and glass particles formed in flames by the burners are deposited on the target, the burners are inverted at different positions according to the reciprocation cycle.

[Citation List]

[Patent Literature]

Patent Literature 1: Japanese Patent Application Laid-Open No. H10-7430
Patent Literature 2: Japanese Patent Application Laid-Open No. 2013-249233

[Summary of Invention]

[Technical Problem]

However, according to the manufacturing method disclosed in Patent Literature 2, taper portions, which are ineffective portions, become longer at the ends of the optical fiber preform by the distance by which the inverting positions of the burners is shifted, and as a result, the cost may be increased.

It is an object of the present invention to provide an apparatus for manufacturing an optical fiber preform and a method for manufacturing an optical fiber preform which can manufacture a high quality optical fiber preform without increasing the cost, in view of the above problems.

[Solution to Problem]

According to one aspect of the present invention, there is provided an apparatus for manufacturing an optical fiber preform, the apparatus including: a holding part that rotatably holds a target with a center axis of the target as a rotation axis; a plurality of burner units that are arranged at mutually different positions in a circumferential direction of the target, forms flames for generating glass particles to be deposited on the target, and are capable of performing reciprocating movements along the target in a movable range between a first position on one end side of the target and a second position on the other end side of the target; and a control unit that controls the plurality of burner units so that speeds of return movements of the plurality of burner units that perform the reciprocating movements are different from each other.

According to another aspect of the present invention, there is provided a method for manufacturing an optical fiber preform using an apparatus for manufacturing an optical fiber preform, the apparatus including: a holding part that rotatably holds a target with a center axis of the target as a rotation axis; and a plurality of burner units that are arranged at mutually different positions in a circumferential direction of the target, forms flames for generating glass particles to be deposited on the target, and are capable of performing reciprocating movements along the target in a movable range between a first position on one end side of the target and a second position on the other end side of the target, the method including: while rotating the target by the holding part, making the plurality of burner units forming the flames perform the reciprocating movements along the target in the movable range to deposit the glass particles on the target; and controlling the plurality of burner units so that speeds of return movements of the plurality of burner units that perform the reciprocating movements are different from each other.

[Advantageous Effects of Invention]

According to the present invention, it is possible to manufacture a high quality optical fiber preform without increasing the cost.

[Brief Description of Drawings]

[Fig. 1]

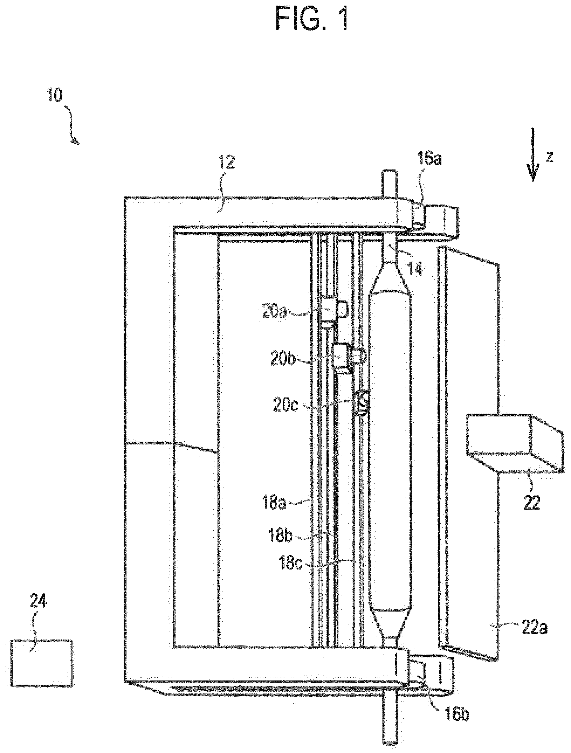

Fig. 1 is a schematic diagram illustrating an apparatus for manufacturing an optical fiber preform according to an embodiment of the present invention.
[Fig. 2]

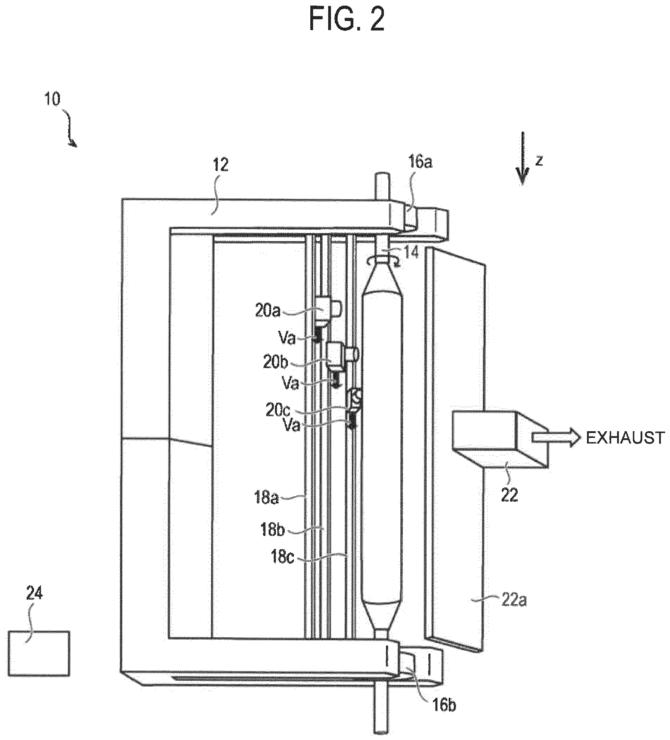

Fig. 2 is a schematic diagram (part 1) illustrating a method of manufacturing an optical fiber preform according to an embodiment of the present invention.
[Fig. 3]

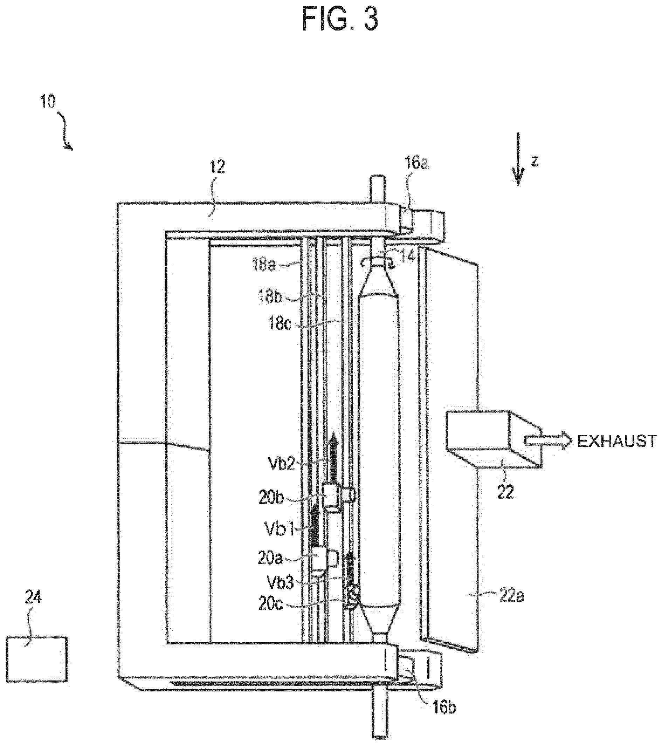

Fig. 3 is a schematic diagram (part 2) illustrating the method for manufacturing an optical fiber preform according to the embodiment of the present invention.
[Fig. 4]

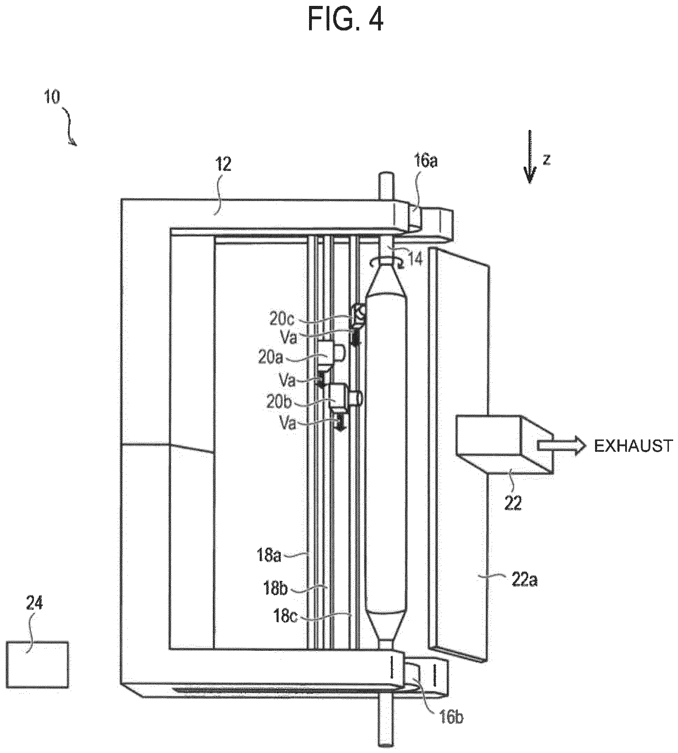

Fig. 4 is a schematic diagram (part 3) illustrating the method for manufacturing an optical fiber preform according to the embodiment of the present invention.

[Description of Embodiments]

[One Embodiment]

An apparatus for manufacturing an optical fiber preform and a method for manufacturing an optical fiber preform according to an embodiment of the present invention will be described with reference to Fig. 1 to Fig. 4. In the following description, a direction along a vertical direction is a Z direction. In the Z direction, a direction from the top to the bottom is defined as a +Z direction, and a direction from the bottom to the top opposite to the +Z direction is defined as a -Z direction. The Z direction is not necessarily a direction along the vertical direction, but may be a direction inclined with respect to a vertical direction. The Z direction may be a direction along a horizontal direction.

First, a configuration of the apparatus for manufacturing an optical fiber preform according to the present embodiment will be described with reference to Fig. 1. Fig. 1 is a schematic diagram illustrating an apparatus for manufacturing an optical fiber preform according to the present embodiment.

The apparatus for manufacturing an optical fiber preform according to the present embodiment is a manufacturing apparatus that manufactures an optical fiber preform by, for example, an outside vapor deposition (OVD) method. As illustrated in Fig. 1, the apparatus 10 for manufacturing an optical fiber preform according to the present embodiment includes an apparatus base 12 and holding parts 16a and 16b that hold a target rod 14. Further, the apparatus 10 for manufacturing an optical fiber preform includes a plurality of burner guides 18a, 18b and 18c, a plurality of burners 20a, 20b and 20c, an exhaust mechanism 22, and a control device 24. Note that, in the present embodiment, a case in which the number of burners N is 3, with three burners 20a, 20b and 20c and three burner guides 18a, 18b and 18c corresponding to them installed, is described as an example, but the number of burners N is not particularly limited and may be any natural number of 2 or more.

The apparatus base 12 functions as a support that supports the holding parts 16a and 16b and the burner guides 18a, 18b and 18c. The apparatus base 12 supports the holding parts 16a and 16b so that the holding part 16a and the holding part 16b face each other in the Z direction. The apparatus base 12 supports the burner guides 18a, 18b and 18c along the Z direction. The apparatus base 12 is not particularly limited and may be, for example, a pedestal, plate, or frame-like structure that supports the holding parts 16a and 16b, and the burner guides 18a, 18b and 18c together or separately.

The target rod 14 is a cylindrical rod-shaped core material as a target for forming an optical fiber preform. The target rod 14 is, for example, a quartz glass rod for the core of an optical fiber. On the outer peripheral surface of the target rod 14, as will be described later, glass fine particles of, for example, quartz glass called soots, which are generated by a plurality of burners 20a, 20b and 20c, are deposited to form a porous optical fiber preform composed of a deposit of the glass fine particles. The deposited glass particles are not particularly limited and may vary depending on the manufacturing conditions, but are, for example, glass particles each having a particle size of 0.01 $\mu$m to 0.2 $\mu$m.

The holding parts 16a and 16b hold the target rod 14 rotatably with the center axis of the target rod 14 as the rotation axis. The holding parts 16a and 16b are provided with a space in the Z direction at which the target rod 14 can be held. The holding part 16a rotatably holds an upper end which is one end of the target rod 14, and the holding part 16b rotatably holds a lower end which is the other end of the target rod 14. Thereby, the holding parts 16a and 16b hold the target rod 14 so that the center axis thereof is along the Z direction, and hold the target rod 14 rotatably with the center axis of the target rod 14 as the rotation axis.

Further, the holding parts 16a and 16b are configured to rotate the target rod 14 with the center axis of the target rod 14 as the rotation axis in accordance with control by the control device 24. The holding parts 16a and 16b can change the rotational speed at which the target rod 14 is rotated in accordance with the control by the control device 24.

The burner guides 18a, 18b and 18c are supports that support the burners 20a, 20b and 20c so as to make the burners 20a, 20b and 20c reciprocally movable within predetermined movable ranges along the Z direction. The burner guides 18a, 18b and 18c are supported by the apparatus base 12 along the Z direction along the target rod 14 held along the Z direction by the holding parts 16a and 16b. The burner guides 18a, 18b and 18c are arranged at predetermined positions from the outer peripheral surface of the target rod 14 in a predetermined range in the outer peripheral direction of the target rod 14 with predetermined intervals.

The plurality of burners 20a, 20b and 20c are supported by the burner guides 18a, 18b and 18c so as to face the target rod 14, respectively, and are arranged at mutually different positions in the circumferential direction of the target rod 14. The plurality of burners 20a, 20b and 20c are configured so as to be capable of repeatedly reciprocating in the Z direction, which is the moving direction along the center axis of the target rod 14, within predetermined movable ranges, under the control of the control device 24. That is, the plurality of burners 20a, 20b and 20c are configured to alternately repeat the movements in the +Z direction and the movements in the -Z direction within predetermined movable ranges.

The movable ranges of the plurality of burners 20a, 20b and 20c are ranges in the Z direction between starting points at the upper end side of the target rod 14 and returning points at the lower end side of the target rod 14. The starting points of the plurality of burners 20a, 20b and 20c may be positionally the same or different from each other in the Z direction. The returning points of the plurality of burners 20a, 20b and 20c may be also positionally the same or different from each other in the Z direction. Note that the starting point and the returning point may be upside down.

The plurality of burners 20a, 20b and 20c can change the moving speeds and the moving directions in the +Z direction and the -Z direction during the reciprocating movements in accordance with the control by the control device 24. The moving mechanism of the plurality of burners 20a, 20b and 20c is not particularly limited, and is, for example, a moving mechanism by a linear motor, a ball screw, or the like. The moving speeds and the moving directions of the plurality of burners 20a, 20b and 20c will be described in detail later.

Each of the burners 20a, 20b and 20c is a burner unit that forms a flame for generating glass fine particles toward the target rod 14 from a jet port. Each of the burners 20a, 20b and 20c has, for example, a jet nozzle of a flame forming gas formed in a concentric and multilayered manner at the jet port of the flame. The flame forming gas includes, for example, a combustible gas such as hydrogen or the like and a combustion supporting gas such as oxygen or the like. The burner unit is not limited to a burner alone. That is, instead of each or at least one of the plurality of burners 20a, 20b and 20c, a burner array in which a plurality of burners are integrated can be used as a burner unit. The burner array may be configured to have an array that reciprocates in the same manner as each burner 20a, 20b and 20c, and a plurality of burners mounted on the array. The burners in the burner array may be configured in the same manner as the burners 20a, 20b and 20c.

The plurality of burners 20a, 20b and 20c are configured, since the flame is formed from the jet port and a raw material gas is introduced into the flame, so that a plurality of kinds of gases including the flame forming gas and a raw material gas are supplied to the plurality of burners 20a, 20b and 20c. The plurality of kinds of gases supplied to the plurality of burners 20a, 20b and 20c are, for example, a hydrogen gas, an oxygen gas, an argon gas, a raw material gas, and the like. The raw material gas includes silicon tetrachloride and the like. The argon gas is suitably used as a carrier gas or the like. In each of the burners 20a, 20b and 20c, an oxyhydrogen flame is formed by combustion of the hydrogen gas and the oxygen gas, and the raw material gas is introduced into the oxyhydrogen flame. When the raw material gas introduced into the flame undergoes flame hydrolysis, the glass fine particles are generated and deposited on the outer peripheral surface of the target rod 14.

The plurality of burners 20a, 20b and 20c are supported by 18a, 18b and 18c along a surface orthogonal to the Z direction so that the respective jet ports of the flames face the center axis of the target rod 14. Each of the burners 20a, 20b and 20c is movable in the +Z direction and the -Z direction while directing the jet port toward the center axis of the target rod 14. The distance between the respective burners 20a, 20b and 20c and the target rod 14 is set to a distance at which the glass fine particles generated by the respective burners 20a, 20b and 20c can be deposited on the target rod 14.

The exhaust mechanism 22 is arranged to face the sides of the burner guides 18a, 18b and 18c so as to face the burner guides 18a, 18b and 18c via the target rod 14. The exhaust mechanism 22 has an exhaust hood 22a that collects an exhaust gas after combustion of the flames by the plurality of burners 20a, 20b and 20c. The exhaust hood 22a is provided over parts or all of the movable ranges of the plurality of burners 20a, 20b and 20c along the Z direction. An exhaust ventilator (not illustrated) is connected to the exhaust mechanism 22. The exhaust mechanism 22 collects a gas in a space between a region including the movable ranges of the plurality of burners 20a, 20b and 20c in the burner guides 18a, 18b and 18c and the exhaust mechanism 22 through the exhaust hood 22a to exhaust the gas by the exhaust ventilator. The exhaust mechanism 22 exhausts the gas containing excess glass fine particles, which are generated by the plurality of burners 20a, 20b and 20c and are suspended without being deposited on the target rod 14, to make it possible to stabilize the flames of the plurality of burners 20a, 20b and 20c.

The control device 24 is an information processing device that functions as a control unit that manages and controls each part of the apparatus 10 for manufacturing an optical fiber preform, while an optical fiber preform is manufactured by depositing the glass fine particles on the target rod 14. The control device 24 includes a CPU (Central Processing Unit) (not illustrated) that executes various operations, controls, and determinations, and the like. Further, the control device 24 has a storage device (not illustrated) that stores various control programs executed by the CPU, database referred to by the CPU, and the like. Further, the control device 24 has a RAM (Random Access Memory) (not illustrated) that temporarily stores data processed by the CPU, input data, and the like.

Note that the control device 24 is not particularly limited and may be formed of a general-purpose computer device such as a personal computer, or may be formed of a computer device dedicated to the apparatus 10 for manufacturing an optical fiber preform. Each function of the control device 24 can be implemented by a single computer device or a plurality of computer devices.

The control device 24 is communicatively connected to, for example, the holding parts 16a and 16b, the plurality of burners 20a, 20b and 20c, and the exhaust mechanism 22. Thus, the control device 24 can control the respective parts of the holding parts 16a and 16b, the plurality of burners 20a, 20b and 20c, the exhaust mechanism 22, and the like in the apparatus 10 for manufacturing an optical fiber preform.

The control device 24 can control the holding parts 16a and 16b to control the rotational speed of the target rod 14 by the holding parts 16a and 16b. The control device 24 can maintain the rotational speed of the target rod 14 at a constant rotational speed or change the rotational speed of the target rod 14 according to the time from the start of manufacturing, while manufacturing an optical fiber preform, for example.

Further, the control device 24 can control the moving speed and the moving direction of the plurality of burners 20a, 20b and 20c that forms the flames as follows while rotating the target rod 14 by the holding parts 16a and 16b.

First, the control device 24 can move the plurality of burners 20a, 20b and 20c at the same speed Va in an outward movement from the starting point to the returning point in the +Z direction in the reciprocating movements of the plurality of burners 20a, 20b and 20c. The control device 24 can control the plurality of burners 20a, 20b and 20c so that the speed Va of the outward movement becomes the same at least for each outward movement in the repeated outward movements. That is, in the repeated reciprocating movements, the speeds Va in the different outward movements may be the same or different. Note that, in the present embodiment, in the reciprocating movements of the plurality of burners 20a, 20b and 20c, the movement in the +Z direction is defined as the outward movement, and the movement in the -Z direction is defined as the return movement, but the definitions of the outward movement and the return movement may be opposite to each other. That is, in the reciprocating movements of the plurality of burners 20a, 20b and 20c, the movement in the -Z direction may be defined as the outward movement, and the movement in the +Z direction may be defined as the return movement.

Further, the control device 24 can move the plurality of burners 20a, 20b and 20c at different speeds Vb1, Vb2 and Vb3, respectively, in the return movement from the returning points to the starting points in the -Z direction in the reciprocating movements of the plurality of burners 20a, 20b and 20c. Here, the control device 24 can set the speeds Vb1, Vb2 and Vb3 to be higher than twice the speed Va of the outward movements.

Specifically, the control device 24 can control the speed Vb1, Vb2 and Vb3 of the return movements as follows. That is, the control device 24 sets a maximum value and a minimum value for each of the distance between the burners 20a and 20b adjacent to each other in the movement path and the distance between the burners 20b and 20c adjacent to each other in the movement path. Here, assuming that the burner 20a is moving in the leading position and the speeds Vb1 and Vb2 satisfy Vb1 < Vb2, the distance between the burner 20a and the burner 20b is getting closer with each return path. In this case, when the distance becomes shorter than the minimum value, the control device 24 switches the speeds Vb1 and Vb2 of the burners 20a and 20b so that the speeds Vb1 and Vb2 satisfy Vb1 > Vb2 in the next return path. Thereafter, by continuing Vb1 > Vb2, the distance between the burner 20a and the burner 20b moves away with each return path. Then, when the distance goes away until the distance exceeds the maximum value, the control device 24 switches the speeds Vb1 and Vb2 of the burners 20a and 20b so that the speeds Vb1 and Vb2 satisfy Vb1 < Vb2 again. Thereafter, the control device 24 repeats switching of the speeds Vb1 and Vb2 in the same manner. With such control, the distance between the burner 20a and the burner 20b changes with each reciprocating movement, so that the positions where the burner 20a and the burner 20b cross with each other can be irregularly changed. Note that the control device 24 can switch the speeds Vb2 and Vb3 by using the maximum and minimum values set for the distance between the burner 20b and the burner 20c in the same manner as the speeds Vb1 and Vb2.

In this way, the control device 24 controls the plurality of burners 20a, 20b and 20c so that the speeds Vb1, Vb2 and Vb3 of the return movements of the plurality of burners 20a, 20b and 20c which perform the reciprocating movements are different from each other.

Further, the control device 24 can set, using one of the burners 20a, 20b and 20c as a reference burner, the speeds of the return movements of the remaining burners to speeds within ±20% of the speed of the return movement of the reference burner.

The control device 24 may set the speeds Vb1, Vb2 and Vb3 of the return movements of the plurality of burners 20a, 20b and 20c to be, for example, faster than 400 mm/min and slower than 28,000 mm/min, respectively.

The control device 24 switches the moving directions of the plurality of burners 20a, 20b and 20c which the control device 24 has caused to move in the outward path in the +Z direction from the +Z direction to the -Z direction at the returning point. The control device 24 switches the moving directions of the plurality of burners 20a, 20b and 20c which the control device 24 has caused to move in the return path in the -Z direction from the -Z direction to the +Z direction at the starting point. By switching the moving directions in this way, the control device 24 repeats the reciprocating movements of the plurality of burners 20a, 20b and 20c in the movable ranges along the Z direction.

The plurality of burners 20a, 20b and 20c perform the reciprocating movements at intervals along the movement path where they perform the reciprocating movements due to speed differences caused by the speed control by the control device 24 described above. Here, the distance in the Z direction of each of the movable ranges in which the plurality of burners 20a, 20b and 20c reciprocate is defined as L, that is, the distance in the Z direction of the outward path and the distance in the Z direction of the return path of the reciprocating movement are defined as L, respectively. The control device 24 can control the speed of the plurality of burners 20a, 20b and 20c so that the sum of the distances between the burners adjacent to each other in the outward path of the plurality of burners 20a, 20b and 20c arranged along the movement path of the plurality of burners 20a, 20b and 20c is less than the distance L. Note that the control device 24 may control the speed of each burner so that each distance between the adjacent burners described above is greater than zero.

For example, consider a case where the burners 20a, 20b and 20c are arranged in this order in the outward path along the movement path. In this case, the control device 24 can control the speeds of the plurality of burners 20a, 20b and 20c so that the sum of the distance between the burner 20a and the burner 20b and the distance between the burner 20b and the burner 20c is less than the distance L. That is, the control device 24 can control the speed of the plurality of burners 20a, 20b and 20c so that the sum of the distances between the burners adjacent to each other in the outward path among the plurality of burners 20a, 20b and 20c arranged in the outward path is less than the distance L.

When the number of burners is N, the control device 24 can control the speeds of N burners so as to satisfy the following Expression (1), where the distance between the m-th burner and the (m+1)-th burner counted from the starting point is denoted as d(m, m+1) in the line of N burners moving in order in the outward path, for example. Note that m is a natural number satisfying $1 \leq m \leq N-1$.

[Math. 1]

$$\sum_{m=1}^{N-1} d\left(m, m+1\right) < L \qquad (1)$$

Note that the control device 24 can control the speeds of the N burners so as to further satisfy the following Expression (2) so that the N burners do not overlap and reciprocate.

$$0 < d(m,\ m+1) \qquad (2)$$

Note that the arrangement of the N burners in the outward path may include the following first to third cases according to the arrangement order of the first, middle and last burners in the moving order. The first case is a case where the last burner, the middle burner and the first burner are arranged in the order from the starting point to the returning point in the outward path. The second case is a case where the first burner, the last burner and the middle burner are arranged in the order from the starting point to the returning point in the outward path. The third case is a case where the middle burner, the first burner and the last burner are arranged in the order from the starting point to the returning point in the outward path.

The control device 24 may set the above maximum and minimum distances between adjacent burners in the movement path of the plurality of burners 20a, 20b and 20c to, for example, 0.3L and 0.1L, respectively. The maximum and minimum values of the distance between the adjacent burners are not limited to the values shown in the examples, and are values which may vary depending on the number of burners N. When the number of burners is N, the control device 24 can control the speed of the N burners so as to satisfy the following Expression (3) for the above distance d(m, m+1).

[Math. 2]

$$d\left(m, m+1\right) < \frac{L}{N-1} \qquad (3)$$

Note that, regarding the minimum value of the distance between the adjacent burners, it is desirable that d(m, m+1) be set to a distance or more at which the flames of the adjacent burners or burner arrays do not interfere with each other, as a condition that the flames of the burner or burner array do not interfere with each other. The control device 24 can control the speeds of the N burners so that d(m, m+1) is greater than or equal to such a distance.

The control device 24 controls the plurality of burners 20a, 20b and 20c to control the flow rates of various gases supplied to the plurality of burners 20a, 20b and 20c and to control the generation of glass fine particles by the plurality of burners 20a, 20b and 20c. Further, the control device 24 can control exhaust by an exhaust mechanism including the exhaust mechanism 22.

Thus, the apparatus 10 for manufacturing an optical fiber preform according to the present embodiment is configured.

Next, a method of manufacturing an optical fiber preform by the apparatus 10 for manufacturing an optical fiber preform according to the present embodiment will be described further with reference to Fig. 2 to Fig. 4. Fig. 2 to Fig. 4 are schematic diagrams illustrating the method of manufacturing an optical fiber preform according to the present embodiment.

The apparatus 10 for manufacturing an optical fiber preform starts manufacturing an optical fiber preform from the following initial state. That is, in the initial state, the burners 20a, 20b and 20c in the burner guides 18a, 18b and 18c, respectively, stop at the starting points of reciprocating movements located on the upper end side of the target rod 14 in the Z direction. The starting points of the plurality of burner guides 18a, 18b and 18c may be positionally the same or different from each other in the Z direction. In the initial state, the plurality of burners 20a, 20b and 20c do not necessarily stop at the starting points of the reciprocating movements, and may be positioned between the starting points and the returning points of the reciprocating movements.

The control device 24 controls the exhaust mechanism 22 to start exhaust by the exhaust mechanism 22. The control device 24 controls the plurality of burners 20a, 20b and 20c to form the flames by the plurality of burners 20a, 20b and 20c to start the generation of the glass fine particles. Further, the control device 24 controls the holding parts 16a and 16b to start the rotation of the target rod 14 by the holding parts 16a and 16b. The control device 24 continuously supplies various gases including the flame gas and the raw material gas to the respective burners 20a, 20b and 20c during the period from the start to the end of manufacturing the optical fiber preform. Note that the control device 24 can appropriately change the rotational speed of the target rod 14 by the holding parts 16a and 16b, the flow rate of the various gases supplied to the respective burners 20a, 20b and 20c, and the like.

Then, the control device 24 controls the plurality of burners 20a, 20b and 20c to move the plurality of burners 20a, 20b and 20c in the +Z direction from the starting points at the same speed Va, as illustrated in Fig. 2.

Thus, the control device 24 moves the plurality of burners 20a, 20b and 20c forming the flames in the +Z direction at the same speed Va and moves them in the outward direction while rotating the target rod 14 by the holding parts 16a and 16b. By moving the plurality of burners 20a, 20b and 20c in the outward direction at the same speed Va, it is possible to deposit the glass fine particles more uniformly on the target rod 14. Note that the control device 24 can control the plurality of burners 20a, 20b and 20c so that the speed Va becomes the same at least for each reciprocating movement in the repeated reciprocating movements. While the plurality of burners 20a, 20b and 20c move in the +Z direction to perform the outward movements, the glass fine particles generated by the respective burners 20a, 20b and 20c are deposited on the outer peripheral surface of the rotating target rod 14.

Note that the control device 24 does not necessarily have to set the speeds of the outward movements of the plurality of burners 20a, 20b and 20c to the same speed, and can set the speeds to different speeds within a predetermined speed range.

When the plurality of burners 20a, 20b and 20c perform the outward movements to reach the returning points, the control device 24 switches the moving directions of the plurality of burners 20a, 20b and 20c from the +Z direction to the -Z direction. As illustrated in Fig. 3, the control device 24 moves the plurality of burners 20a, 20b and 20c switched in the - Z direction from the returning points in the -Z direction at the different speeds Vb1, Vb2 and Vb3, respectively.

Thus, the control device 24 controls the burners 20a, 20b and 20c so that the return speeds of the burners 20a, 20b and 20c that perform the reciprocating movements are different from each other during the deposition of the glass fine particles on the target rod 14 as described above. That is, the control device 24 moves the plurality of burners 20a, 20b and 20c forming the flames in the -Z direction at the mutually different speeds Vb1, Vb2 and Vb3 while rotating the target rod 14 by the holding parts 16a and 16b. While the plurality of burners 20a, 20b and 20c move in the -Z direction to perform the return movements, the control device 24 can set the respective speeds Vb1, Vb2 and Vb3 of the return movements faster than twice the speed Va of the outward movements.

When the plurality of burners 20a, 20b and 20c perform the return movements to sequentially reach the starting points, the control device 24 sequentially switches the moving directions of the plurality of burners 20a, 20b and 20c from the -Z direction to the +Z direction. As illustrated in Fig. 4, the control device 24 moves the plurality of burners 20a, 20b and 20c switched in the +Z direction from the starting points in the +Z direction at the same speed Va.

Thereafter, in the same manner as described above, the control device 24 repeatedly makes the plurality of burners 20a, 20b and 20c perform the reciprocating movements including the outward movements and the return movements, to deposit the glass fine particles on the outer peripheral surface of the target rod 14.

The control device 24 stops the operation of each part of the apparatus 10 for manufacturing an optical fiber preform and ends the manufacturing of the optical fiber preform based on the result of detecting the weight change of the target rod 14, the result of detecting the thickness of the deposited glass fine particles, the elapsed time from the start of the manufacturing, or the like, for example.

Thus, the optical fiber preform having the target rod 14 and the porous deposit of the glass fine particles deposited on the outer periphery of the target rod 14 is manufactured. The manufactured optical fiber preform is dehydrated and sintered by heating in a heating furnace such as an electric furnace to become a transparent optical fiber preform. Note that the target rod 14 may be a core rod that is pulled out before heating, or a core rod that constitutes the optical fiber preform.

When a plurality of burners for depositing glass fine particles are reciprocated with respect to a target rod, if the speed of the return movement is slow, the time when the burner moving in the outward path and the burner moving in the return path pass each other and cross each other in the repeated reciprocating movements is prolonged. As a result, the deposition state such as the deposition amount of the glass fine particles varies locally at the portion of the target rod corresponding to the position where the burners cross.

In contrast, in the present embodiment, by setting the respective speeds Vb1, Vb2 and Vb3 in the return movements faster than twice the speed Va in the outward movements, it is possible to shorten the time for the burners to cross. Thus, in the outward movements of the respective burners 20a, 20b and 20c, the deposition of the glass fine particles generated by the respective burners 20a, 20b and 20c on the outer peripheral surface of the target rod 14 can be reduced, and further, the deposition of the glass fine particles can be substantially prevented. As a result, the local variation of the deposition state of the glass fine particles due to the crossing of the burners can be reduced, and further, the local variation of the deposition state can be prevented.

Here, if the speed of the return movement is only a little faster than the speed of the outward movement, there is a risk that the glass fine particles in a deposited state different from the part where the glass fine particles were deposited in the outward path may be deposited in the return path unless the conditions of the gases supplied to the burners are changed. When such deposition is repeated, the layered gradation in the density of the deposited glass fine particles is repeated, which may cause cracks in the glass preform. Even if the speed of the return movement is slightly faster than the speed of the outward movement, it is theoretically possible to suppress the irregularity caused by the density gradation by changing the conditions of the gases supplied to the burners. However, it is difficult to achieve the same deposition state by correcting the velocity change with the gas conditions while the soot diameter gradually increases as the glass fine particles are deposited.

In contrast, in the present embodiment, the respective speeds Vb1, Vb2 and Vb3 in the return movements can be set to a certain higher speed which is faster than twice the speed Va of the outward movement, thereby making the speed sufficiently faster than the speed Va. Thus, the deposition of the glass fine particles in the return movements can be substantially prevented, and the occurrence of the irregularity caused by the density gradation of the glass fine particles deposited on the target rod 14 can be substantially prevented.

However, the irregularity caused by density gradation when a burner moving on the outward path and a burner moving on the return path cross is reduced by increasing the speed in the return path, but does not strictly become zero. Therefore, if the crossing positions of the burners are always the same, that is, if the distance between the burners is always the same, small variations due to irregularities at the crossing positions may be accumulated, resulting in outer diameter variations that cannot be ignored in the final product. In the case of the three burners of the first burner, the second burner and the third burner, the crossing positions of the following six positions are always the same at the maximum, and the outside diameter variations may occur. The six crossing positions are the crossing position of the first burner in the return movement and the second burner in the outward movement, the crossing position of the first burner in the return movement and the third burner in the outward movement, the crossing position of the second burner in the return movement and the first burner in the outward movement, the crossing position of the second burner in the return movement and the third burner in the outward movement, the crossing position of the third burner in the return movement and the first burner in the outward movement, and the crossing position of the third burner in the return movement and the second burner in the outward movement.

In contrast, in the present embodiment, since the speeds Vb1, Vb2 and Vb3 of the return movements of the plurality of burners 20a, 20b and 20c are different from each other, the distance between the plurality of burners 20a, 20b and 20c changes and thus the crossing positions changes. As a result, small variations are prevented from being unevenly accumulated at a particular position. Thus, in the present embodiment, it is possible to manufacture the high-quality optical fiber preform by reducing structural irregularities and structural variations in the optical fiber preform.

The speeds Vb1, Vb2 and Vb3 of the outward movements can be set such that one of the plurality of burners 20a, 20b and 20c is used as a reference burner and the speeds of the remaining other burners in the return movements are speeds within ±20% of the speed of the reference burner in the return movement. By setting the speeds Vb1, Vb2 and Vb3 of the outward movements within such a range, the glass fine particles can be deposited on the outer peripheral surface of the target rod 14 with high uniformity over the direction along the center axis of the target rod 14.

Further, the speeds Vb1, Vb2 and Vb3 of the return movements of the plurality of burners 20a, 20b and 20c can be set to be, for example, faster than 400 mm/min and slower than 28,000 mm/min, respectively. By setting the speeds of the outward movements to speeds in such a range, the optical fiber preform can be manufactured with high efficiency and high stability.

Further, as described above, the speeds Va, Vb1, Vb2 and Vb3 of the plurality of burners 20a, 20b and 20c can be controlled within a speed range between a low speed side speed and a high speed side speed so that the distance between the burners adjacent to each other in the movement path of the plurality of burners 20a, 20b and 20c falls between the maximum value and the minimum value. For example, among the plurality of burners 20a, 20b and 20c, the speed of return movement of the reference burner can be made constant, and the speed of return movement of the other burners can be controlled within a range of ±20% of the speed of the outward movement of the reference burner.

In the present embodiment, since there is no need to shift the starting point or the returning point in the reciprocating movements of the plurality of burners 20a, 20b and 20c from each other, the tapered portions at both ends of the optical fiber preform to be manufactured are not elongated. Therefore, the optical fiber preform can be manufactured without increasing the cost.

Thus, according to the present embodiment, the high quality optical fiber preform can be manufactured without increasing the cost.

[Example]

A 30 mm diameter quartz glass core rod was used as a target rod and rotated at 60 rpm. Three burners directed toward the target rod were caused to perform the reciprocating movements in a direction along the target rod. An oxyhydrogen burner was used as each burner. The diameter of each burner was 60 mm, and the distance from the tip of each burner to the surface of the target rod was 120 mm.

As shown in Tables 1 and 2 below, the three burners B1, B2, and B3 changed their speeds in the outward paths and the return paths in the reciprocating movements. As for the speeds of the return movements of the two burners B1 and B3, control was performed to switch the speeds on the low speed side and the speed on the high speed side by using the maximum and minimum values set for the distance between the burners adjacent to each other in the movement path as described above. Thus, the distance between the burners adjacent to each other in the movement path is set to be 0.1L to 0.3L. Note that the distance L was set equal to the effective length of the preform shown in Tables 1 and 2.

The middle burner B2 among the three burners B1, B2 and B3 arranged in the outer peripheral direction of the target rod was set as a reference, the speed of the return path of the reference burner B2 was set to Vb2, and the speeds Vb1 and Vb3 of the return paths of the burners B1 and B3 were set to within Vb2 ±13%. Thus, the three burners were controlled so as to repeatedly move away from each other and move closer to each other within a range in which the distance between the burners in the movement path was a maximum of 900 mm and a minimum of 500 mm.

Each of the burner B1, B2 and B3 was supplied with 20 liters/min of hydrogen and 80 liters/min of oxygen from a gas supply device to generate oxyhydrogen flames. Into these flames, 100 g/min of silicon tetrachloride was introduced from the gas supply device, and $SiO_2$ glass fine particles were formed by an oxidation reaction. The glass fine particles were deposited on the target rod to manufacture a porous optical fiber preform. Dispersion in the radial direction of the manufactured optical fiber preform was evaluated by the ratio of the outside diameter variation to the average outside diameter. When the ratio of the variation in the outer diameter to the average outer diameter was less than 1%, it was considered that the high-quality optical fiber preform was obtained, and the evaluation result on the variation in the radial direction was determined to be "OK".

Tables 1 and 2 show various conditions and evaluation results for Examples 1 to 6. In each of Examples 1 to

9

6, the irregularity and variation of the soots during the deposition were less than specified. Further, in each of Examples 1 to 6, the speeds of the outward paths were unified as the speed conditions for the three burners, and the speeds of the return path were set to be very high as compared with the outward path, so that the deposition of the glass fine particles in the return path becomes substantially zero, thereby reducing the layered unevenness in the radial direction.

[Table 1]

Table 1

| | Example 1 | | | Example 2 | | | Example 3 | | |
|---|---|---|---|---|---|---|---|---|---|
| | Speed in outward path (mm/min) | Speed in return path (mm/min) | | Speed in outward path (mm/min) | Speed in return path (mm/min) | | Speed in outward path (mm/min) | Speed in return path (mm/min) | |
| | | Low speed side | High speed side | | Low speed side | High speed side | | Low speed side | High speed side |
| Burner B1 | 300 | 27,000 | 27,540 | 300 | 15,000 | 15,300 | 300 | 6,000 | 6,120 |
| Burner B2 | 300 | 27,270 | | 300 | 15,150 | | 300 | 6,060 | |
| Burner B3 | 300 | 26,184 | 27,816 | 300 | 14,547 | 15,453 | 300 | 5,819 | 6.181 |
| Target rotation number (rpm) | 60 | | | 60 | | | 60 | | |
| Preform effective length (mm) | 2,500 | | | 2,500 | | | 2,500 | | |
| Variation in radial direction | OK | | | OK | | | OK | | |

[Table 2]

Table 2

| | Example 4 | | | Example 5 | | | Example 6 | | |
|---|---|---|---|---|---|---|---|---|---|
| | Speed in outward path (mm/min) | Speed in return path (mm/min) | | Speed in outward path (mm/min) | Speed in return path (mm/miin) | | Speed in outward path (mm/min) | Speed in return path (mm/min) | |
| | | Low speed side | High speed side | | Low speed side | High speed side | | Low speed side | High speed side |
| Burner B1 | 200 | 432 | 478 | 200 | 1,439 | 1,591 | 200 | 2,879 | 3,182 |
| Burner B2 | 200 | 455 | | 200 | 1,515 | | 200 | 3,030 | |
| Burner B3 | 200 | 410 | 501 | 200 | 1,364 | 1,667 | 200 | 2,727 | | 3.333 |

(continued)

| | Example 4 | | | Example 5 | | | Example 6 | | |
|---|---|---|---|---|---|---|---|---|---|
| | Speed in outward path (mm/min) | Speed in return path (mm/min) | | Speed in outward path (mm/min) | Speed in return path (mm/miin) | | Speed in outward path (mm/min) | Speed in return path (mm/min) | |
| | | Low speed side | High speed side | | Low speed side | High speed side | | Low speed side | High speed side |
| Target rotation number (rpm) | 60 | | | 60 | | | 60 | | |
| Preform effective length (mm) | 2,000 | | | 2,000 | | | 2,000 | | |
| Variation in radial direction | OK | | | OK | | | OK | | |

[Modification Embodiments]

The present invention is not limited to the embodiments described above, and various modifications are possible.

For example, while the case where the three burners 20a, 20b and 20c are used as the plurality of burners has been described in the above embodiment, the present invention is not limited thereto. The plurality of burners may be two or more burners.

Further, while the case where the target rod 14 is held by the holding parts 16a and 16b so that the center axis of the target rod 14 is in the vertical direction has been described in the above embodiment, the present invention is not limited thereto. The apparatus 10 for manufacturing an optical fiber preform may be configured such that the target rod 14 is held by the holding parts 16a and 16b so that the center axis of the target rod 14 is along the horizontal direction, for example.

[List of Reference Numerals]

10 ... apparatus for manufacturing an optical fiber preform
12 ... apparatus base
14 ... target rod
16a, 16b ... holding part
18a, 18b, 18c ... burner guide
20a, 20b, 20c ... burner
22 ... exhaust mechanism
24 ... control device

**Claims**

1. An apparatus for manufacturing an optical fiber preform, the apparatus comprising:

a holding part that rotatably holds a target with a center axis of the target as a rotation axis;
a plurality of burner units that are arranged at mutually different positions in a circumferential direction of the target, forms flames for generating glass particles to be deposited on the target, and are capable of performing reciprocating movements along the target in a movable range between a first position on one end side of the target and a second position on the other end side of the target; and

a control unit that controls the plurality of burner units so that speeds of return movements of the plurality of burner units that perform the reciprocating movements are different from each other.

2. The apparatus for manufacturing an optical fiber preform according to claim 1, wherein the control unit controls the plurality of burner units so that speeds of outward movements of the plurality of burner units that perform the reciprocating movements become the same speed at least for each of the outward movements.

3. The apparatus for manufacturing an optical fiber preform according to claim 2, wherein the control unit sets the speeds of the return movements of the plurality of burner units to be higher than twice the speeds of the outward movements.

4. The apparatus for manufacturing an optical fiber preform according to any one of claims 1 to 4, wherein the control unit controls the plurality of burner units so as to satisfy the following Expressions (1) and (2), where N is the number of the plurality of burner units (N is a natural number satisfying $N \geq 2$), L is a distance of the movable range, and d(m, m+1) is a distance between the m-th burner unit (m is a natural number satisfying $1 \leq m \leq N-1$) and the (m+1)-th burner unit among the plurality of burner units that move in order in an outward path of the reciprocating movement.
[Math. 1]

$$\sum_{m=1}^{N-1} d\left(m, m+1\right) < L \qquad (1)$$

$$0 < d(m, m+1) \qquad (2)$$

5. The apparatus for manufacturing an optical fiber preform according to claim 4, wherein the control unit controls the plurality of burner units so as to satisfy the following Expression (3).
[Math. 2]

$$d\left(m, m+1\right) < \frac{L}{N-1} \qquad (3)$$

6. The apparatus for manufacturing an optical fiber preform according to any one of claims 1 to 5, wherein the control unit sets, using one of the plurality of burner units as a reference burner unit, the speeds of the return movements of the other burners to speeds within $\pm 20\%$ of the speed of the return movement of the reference burner unit.

7. The apparatus for manufacturing an optical fiber preform according to any one of claims 1 to 6, wherein the control unit sets the speeds of the return movements of the plurality of burner units to be faster than 400 mm/min and slower than 28,000 mm/min.

8. A method for manufacturing an optical fiber preform using an apparatus for manufacturing an optical fiber preform, the apparatus comprising:

a holding part that rotatably holds a target with a center axis of the target as a rotation axis; and
a plurality of burner units that are arranged at mutually different positions in a circumferential direction of the target, forms flames for generating glass particles to be deposited on the target, and are capable of performing reciprocating movements along the target in a movable range between a first position on one end side of the target and a second position on the other end side of the target, the method comprising:

while rotating the target by the holding part, making the plurality of burner units forming the flames perform the reciprocating movements along the target in the movable range to deposit the glass particles on the target; and
controlling the plurality of burner units so that speeds of return movements of the plurality of burner units that perform the reciprocating movements are different from each other.

# FIG. 1

# FIG. 2

# FIG. 3

# FIG. 4

## INTERNATIONAL SEARCH REPORT

| International application No. |
| --- |
| **PCT/JP2022/001388** |

**A. CLASSIFICATION OF SUBJECT MATTER**

***C03B 37/018***(2006.01)i
FI: C03B37/018 C

According to International Patent Classification (IPC) or to both national classification and IPC

**B. FIELDS SEARCHED**

Minimum documentation searched (classification system followed by classification symbols)

C03B37/018

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 10-081537 A (FURUKAWA ELECTRIC CO LTD) 31 March 1998 (1998-03-31) | 1-5, 8 |
| | claim 1, paragraphs [0001], [0032]-[0035], [0046], fig. 1 | |
| Y | | 7 |
| A | | 6 |
| Y | JP 2002-167228 A (SUMITOMO ELECTRIC IND LTD) 11 June 2002 (2002-06-11) | 7 |
| | claims 1, 4, paragraph [0001] | |
| A | | 1-6, 8 |
| Y | JP 2001-031431 A (SHIN ETSU CHEM CO LTD) 06 February 2001 (2001-02-06) | 7 |
| | paragraphs [0001]-[0003], [0021] | |
| A | | 1-6, 8 |
| A | JP 2008-069023 A (FURUKAWA ELECTRIC CO LTD) 27 March 2008 (2008-03-27) | 1-8 |
| | entire text, all drawings | |
| A | JP 2016-003153 A (SHIN ETSU CHEM CO LTD) 12 January 2016 (2016-01-12) | 1-8 |
| | entire text, all drawings | |

☑ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **08 March 2022** | **22 March 2022** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

## INTERNATIONAL SEARCH REPORT

| International application No. |
| --- |
| **PCT/JP2022/001388** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 10-007430 A (FURUKAWA ELECTRIC CO LTD) 13 January 1998 (1998-01-13)<br>    entire text, all drawings | 1-8 |
| A | JP 2003-048722 A (SUMITOMO ELECTRIC IND LTD) 21 February 2003 (2003-02-21)<br>    entire text, all drawings | 1-8 |
| A | JP 2013-249233 A (FURUKAWA ELECTRIC CO LTD) 12 December 2013 (2013-12-12)<br>    entire text, all drawings | 1-8 |

Form PCT/ISA/210 (second sheet) (January 2015)

**INTERNATIONAL SEARCH REPORT**
Information on patent family members

International application No.

**PCT/JP2022/001388**

| Patent document cited in search report | | | Publication date (day/month/year) | Patent family member(s) | Publication date (day/month/year) |
|---|---|---|---|---|---|
| JP | 10-081537 | A | 31 March 1998 | (Family: none) | |
| JP | 2002-167228 | A | 11 June 2002 | US 2002/0081377 A1 claims 1, 5, paragraph [0002] EP 1190992 A2 KR 10-2002-0023159 A CA 2357593 A1 | |
| JP | 2001-031431 | A | 06 February 2001 | US 2003/0121290 A1 paragraphs [0003]-[0006], [0080] EP 1065175 A1 KR 10-2001-0049679 A TW 200505807 A | |
| JP | 2008-069023 | A | 27 March 2008 | (Family: none) | |
| JP | 2016-003153 | A | 12 January 2016 | US 2015/0360992 A1 whole document CN 105314841 A | |
| JP | 10-007430 | A | 13 January 1998 | (Family: none) | |
| JP | 2003-048722 | A | 21 February 2003 | (Family: none) | |
| JP | 2013-249233 | A | 12 December 2013 | (Family: none) | |

Form PCT/ISA/210 (patent family annex) (January 2015)

**EP 4 282 839 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H107430 A

- JP 2013249233 A